# EUROPEAN PATENT SPECIFICATION

(11) **EP 1 097 643 B1**
(45) Date of publication and mention of the grant of the patent: **16.02.2005**
(21) Application number: 00870259.9
(22) Date of filing: 31.10.2000
(51) Int. Cl.: A22C 17/04

(54) **A device for deboning animal parts**
Vorrichtung zum Entbeinen von Tiergliedern
Dispositif à désosser des parties d'animaux

(30) Priority: 05.11.1999 US 434471
(43) Date of publication of application: 09.05.2001
(73) Proprietor: FPM International, 2920 Kalmthout (BE)
(72) Inventor: Kessel, Ad, 2691 TP s'Gravezande (NL)
(74) Representative: Luys, Marie-José A.H.

(56) References cited:
- EP-A- 0 465 258
- EP-A- 0 527 677
- EP-A- 0 786 206
- DE-U- 29 817 587
- US-A- 4 446 600
- US-A- 5 173 076

## Description

The present invention relates to a device and a method for the deboning of animal parts, in particular fowl parts according to the preamble of the first claim.

The usual procedure for deboning animal parts is to strip the meat from the bone by forcing the bone in longitudinal direction through a small aperture in a meat stripper disc. The longitudinal movement of the bone through the aperture allows the meat to be scraped from the bone, along the length of the bone. Usually, the meat remains in a single mass after it has been stripped from the bone. An advantage of removing the bone from an edible poultry part is that the cooking time can be reduced. Also, the bone can be separately recovered and further processed for example as bone meal.

From the art, a plurality of methods and devices for removing the bones from the poultry parts are known. From US-A-4.893.378 for example a device is known wherein a plurality of deboning modules are mounted on a revolving support system. As the device revolves, poultry thighs are placed in sequence in the deboning modules and moved to a cutting station where cutting blades cut through the meat of each thigh adjacent the upper knuckle. After the poultry thigh has been carried beyond the cutting blades, meat stripping is performed sequentially on each thigh by moving the meat with respect to the bone. The deboning module includes a pair of notched stripping blades which engage the bone and are displaced along the length of the bone as the bone is rotated, to push the meat along the length of the bone and strip the meat from the bone. To enhance the meat removal, a twisting action is imparted to the bone with respect to the meat in the course of the stripping action. Once the stripping blades have been moved about the lower knuckle of the bone, a rotary disc cuts any portion of meat that remains clinging to the bone.

The device disclosed in US-A-4.893.378 however presents the disadvantage that the meat needs to be cut from the bone before the deboning operation can be started to allow separation of meat and bone to be achieved. This needs to be done in a careful manner to avoid that bone fragments end up in the meat.

Another device for deboning poultry parts known from the art is e.g. disclosed in US-A-5.173.076 and EP-A-786.206 to Systemate. The Systemate device comprises an elongated continuous tray conveyor having a series of rectangular poultry carrier trays mounted thereon to support the poultry part lying in a substantially flat-lying, horizontal position. Each carrier tray is a rectangular shaped plate, having a central semi-cylindrical recess, which extends between the front and rear end of the tray, in transverse direction of the tray conveyor. The bone of the poultry part extends in longitudinal direction along the length of the recess. The tray conveyor is moved along a processing path in the form of an endless loop and includes (a) an upper loading run for loading the poultry part to be deboned into a carrier tray; (b) a lower return run and (c) a deboning run connecting the loading run and the return run. At the position of the deboning run, the device comprises a deboning unit with a stationary cam drum. About the circumference of the cam drum, a series of deboning modules is mounted. Each deboning module comprises an apertured meat stripper disc positioned on a first circumferential side and a bone pusher assembly positioned on the opposite second circumferential side of the cam drum. The bone pusher assembly is displaceable towards and from the meat stripper disc. Each bone pusher assembly comprises a hollow pusher sleeve with an open front end. A pusher rod is slideably mounted within the pusher sleeve. The cam drum comprises a first cam track which moves the pusher sleeve towards the carrier tray, causing the pusher sleeve to engage and urge the poultry part towards its aligned meat stripper disc. As the bone touches the meat stripper disc the pusher rod is moved to urge the bone through the stripper disc.

As the carrier trays with the poultry parts are revolved about the cam drum, each carrier tray is moved into alignment with a meat stripper disc in such a way that the aperture of the stripper disk is aligned with the semi-cylindrical recess of the carrier tray. The carrier tray and aligned meat stripper disk are moved in timed relation about the cam drum to effectuate the deboning operation. Thereby the bone pusher assembly is displaced towards the carrier tray to engage an end part of the poultry part. The bone pusher urges the poultry thighs towards the aligned meat stripper disc, and urges the bone through the aperture in the aligned meat stripper discs. After the deboning operation has been completed, the bone pusher assembly is returned to a retracted position and the carrier tray is moved away from engagement with the deboning unit. The separated meat and bone are dropped out of the bottom of the deboner. To ensure that the bone is completely removed from the meat, the pusher rod is displaced to a position where it extends through the aperture of the meat stripper disc.

A problem that is often encountered with the type of system disclosed in US-A-5.173.076 and EP-A-786.206 is that in the course the deboning process the bone is broken. As a consequence the broken parts need to be manually removed from the meat and the meat may contain bone fragments, which is unwanted. Also, the manual removal of bones from the poultry part is time consuming. There is thus a need to a machine that does not present the risk to damaging the bone in the course of the deboning operation.

US-A-5.267.891 relates to a device for the preparation of lollipops from a.o. chicken wings wherein the meat is trussed over the bone while it remains partly attached to the bone. The bone forms a prehension stick for the meat. Before the trussing action is carried out, the meat must be cut open in transversal direction of the bone.

DE-U1-298 17 587 discloses a meat stripper disc with a prolonged life time, used in the separate of meat from bone of an animal part. The funnel shape of the meat stripper disc assists in centering the bone with respect to the hole in the meat stripper disc, as a result of which the edge of the hole is uniformly charged and the risk to damaging of the edge by the bone or any sharp sides of the bone may be reduced.

It is the aim of the present invention to provide a deboning device with which the problem of bone breaking and bone fragmentation can be overcome.

This is achieved by means of the technical features of the characterizing part of the first claim.

The device of the present invention is characterized the deboning device further comprises
- clamping means (2, 10) for clamping at least part of the animal part (7) within the deboning unit (1) in longitudinal direction of the bone (8), at a position between the bone pusher assembly (10) and the meat stripper device (2),
- means for supporting the meat (9) in cross direction of the bone,
- free space being open around the animal part to allow the meat to be compressed in the course of the deboning operation,
- means for retaining the bone after it has been displaced through the aperture of the meat stripper disc
the aperture in the meat stripper device (21) being smaller than the smallest diameter of the bone.

The meat stripper disc is made of a flexible material to allow it to follow the irregular, inflexible contours of the bone. The diameter of the aperture in the meat stripper disc is chosen to be smaller than the smallest diameter of the bone so as to improve the deboning operation, i.e. to increase the meat yield and to avoid that bone fragments end up in the meat and to avoid that the meat stripper disc is formed by mechanical parts that must be moved with respect to each other to create an aperture for the stripping action.

Because the diameter of the aperture in the meat stripper disc is that small, a substantive force is needed to force the bone to move through the aperture in the meat stripper disc. It has been observed that as the bone pusher assembly is advanced through the interior of the animal part in the course of the deboning process, the meat is compressed in longitudinal direction of the bone. In case of rather large animal parts with a large volume of meat, substantive power is required to force the bone to leave the meat and to displace the bone through the meat stripper disc. To minimise the risk to bone cracking which often occurs when the meat cannot expand to a sufficient extent in cross direction of the animal part and to minimise the risk that the animal part is projected out of the deboning unit because the resistance exerted by the aperture of the meat stripper disc is too large, free space is provided around the animal part to allow the meat to expand in cross direction.

The clamping force exerted to the bone allows to ensure a proper positioning of the animal part with respect to the meat stripper disc.

The means for retaining the bone after it has been displaced through the aperture of the meat stripper disc allow preventing a turning over of the bone in the advancing direction of the device after the bone has been displaced out of the meat. A turning over of the bone would involve a blocking of the device and the need to manually remove the animal part from the device and to complete the deboning in a manual manner.

In a first preferred embodiment of this invention, at least part of the bone pusher assembly is displaceable through the aperture in the meat stripper device, to a position where it extends from the aperture of the meat stripper disc over a distance that is equal to or larger than the length of the tendons. In that way a complete separation of meat and bone can be ensured even in case of parts wherein a strong bonding of the tendons to the bone is present. Such strong bonding can for example be found in larger animal parts for example turkey thighs or in game.

Preferably, in the deboning unit of the device of this invention means are provided with which the positioning of the clamping means may be adjusted to the length of the animal part, so as to allow the device to be used for the deboning of animal parts of varying sizes. Thereto, the bone pusher assembly preferably comprises a pusher rod which is slideably moveable within the deboning unit between a first retracted position in which the animal part may be inserted in the device, and a second extended position in the course of the deboning operation. As the animal part is preferably supported by the meat stripper disc, the clamping force is then exerted by the weight of the bone pusher assembly.

In order to allow the pusher rod to exert the appropriate clamping force to the bone and to have the deboning operation proceeding as complete as possible, the pusher rod comprises at a side facing the meat stripper device a head part which is provided to engage the first end of the bone. Thereto, the shape of the head part may for example be adapted, e.g. be approximately complementary, to the shape of the bone to be received by it or be provided with a longitudinally extending pin provided to engage the upper part of the bone. Preferably also the surface of the head part is roughened and is provided with a coating of an elastic material so as to prevent damaging of the bone and to minimize the amount of bone fragments splitting from the bone in the course of the deboning operation.

To improve the deboning of large animal parts, it is important that the aperture in the meat stripper disc remains aligned with the bone pusher assembly, and that the meat stripper disc remains in the position as it has been mounted within the meat stripper device. Also the meat stripper disc should be capable of withstanding large traction forces when the bone is forced through the aperture in the meat stripper disc. To solve these problems, the meat stripper device comprises at a side pointing away form the bone pusher assembly, a frame for receiving and supporting the meat stripper disc along at least part of its circumference. Preferably, at a side facing the bone pusher assembly, clamping means are provided for removably clamping the meat stripper disc within said frame.

To improve the guiding of the bone towards the aperture in the meat stripper disc, to further minimse bone breaching and improve the meat yield, the material thickness of the meat stripper disc decreases towards the aperture. This can for example be achieved by means of a meat stripper disc of which the side facing the part to be deboned is concave.

The bone pusher assembly of the device of this invention preferably also comprises a centering tube in which the pusher rod is fixed, the centering tube being slideably moveable within the cylinder simultaneously with the pusher rod, to counteract rotation of the pusher rod with respect to the bone and breaking of the bone or projecting of the animal part from the deboning unit.

Furthermore, at a position beyond the meat stripper disc and aligned with the aperture of the meat stripper disc, means are provided in the deboning unit for receiving and retaining the bone in longitudinal direction, after it has been displaced through the aperture meat stripper disc.

The invention is further elucidated in the attached figures and the following description of the figures.
Figure 1 is a view to the top of the device of this invention.
Figure 2 is a cross section through the line I-I of figure 1.
In figure 3, a deboning unit in operation is shown in two different cross sections.
In figure 4 the position of the bone pusher assembly in the course of different stages of the deboning operation is shown.
Figure 5 is a cross section of the meat stripper device.
Flgure 6 shows various stages of the deboning operation.

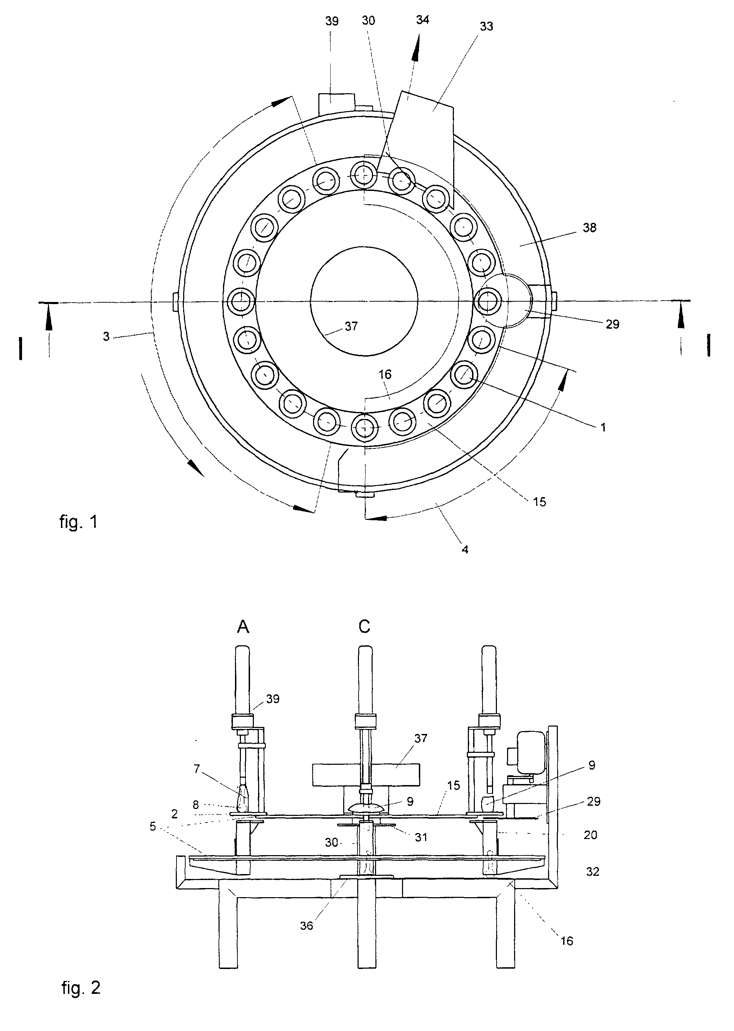

The preferred embodiment of the device of the present invention shown in figure 1, comprises a revolving housing 5 in which a plurality of deboning units 1 are mounted. The housing 5 is of a welded construction. The housing 5 is supported by a plurality of ground supported legs 6 and comprises a removably mounted, upright circumferential wall 32, which surrounds and supports the machine framework. The machine framework comprises a work table 15 mounted at a convenient height for the operator. The work table 15 defines a central aperture 36 wherein the driving system 31 of the device is mounted. The work table 15 shown in figure 1 is substantially circular, but may have other shapes too. A platform 16 is provided for receiving the bones and allowing the bones to be transported to a waste container. In the circumferential wall 32, an opening 33 is provided through which the meat 9 is allowed to leave the device after it has been deboned, the opening giving access to a meat collector (see figure 2).

The housing 5 contains at least one loading position 3 for loading the animal parts into the deboning units 1 and at least one deboning position 4 for deboning the animal parts. Deboning is performed while the housing revolves around the central axis. Depending on the nature of the animal parts that need to be deboned, the deboning operation may extent over a smaller or larger part of the revolving movement. The device may however comprise one or more loading and/or deboning positions. When revolving the work table 15 around a central axis 30, the deboning units are moved from the loading position 3 towards the deboning position 4 and returned to the loading position 3. In general the work table 15 will be rotated simultaneously around the common central axis 30. Platform 16 is preferably not rotated.

The device shown in figure 1 comprises a plurality of deboning units, for example 16. The number of deboning units 1 may however be higher or lower and may be varied within a wide range.

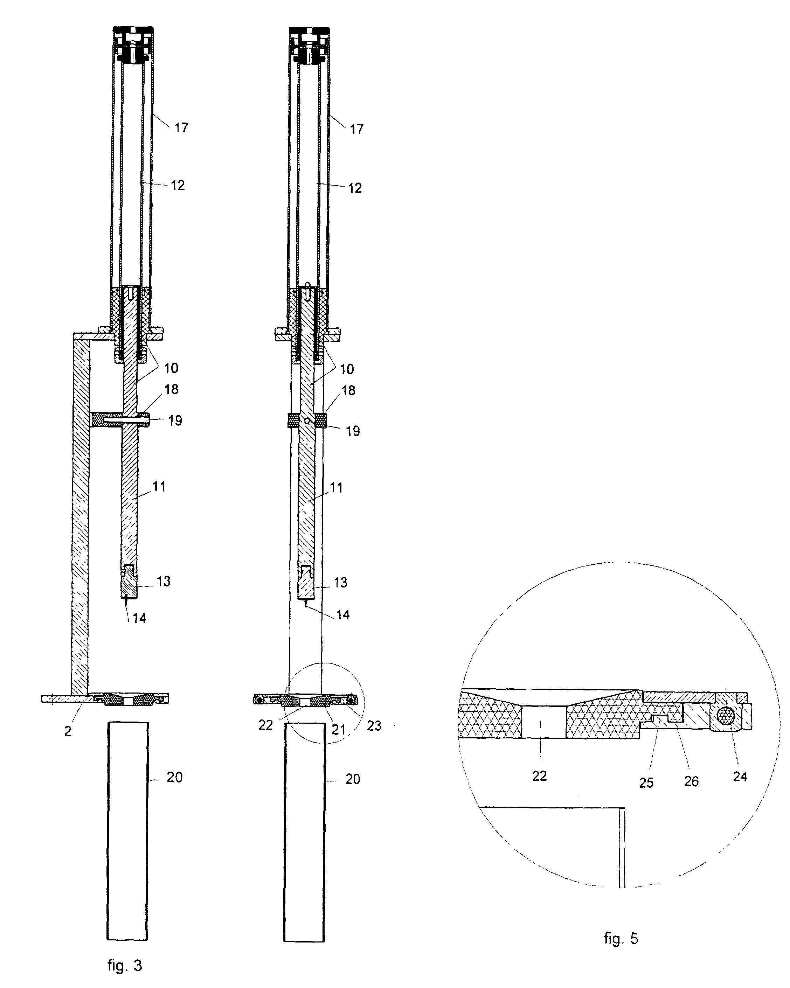

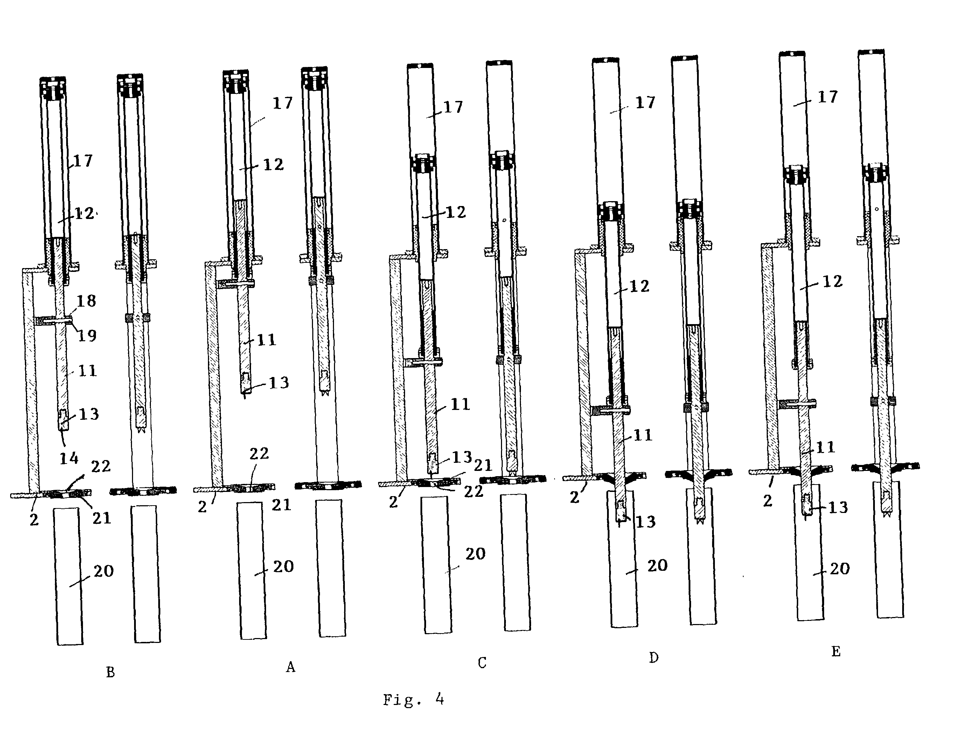

As is shown in figure 3 and figure 5 a plurality of holes is provided in the work table 15 for receiving meat stripper devices 2. The meat stripper device 2 has a substantially circular shape, and comprises a substantially circular collar or frame 23 wherein a meat stripper disc 21 is mounted. The meat stripper disc 21 comprises a central aperture 22, through which the bone 8 of the animal part 7 is displaced in the course of the deboning operation. The diameter of the central aperture 22 is preferably smaller than the smallest diameter of the bone 8 to allow as much meat to be recovered from the animal part as possible. The meat stripper disc 21 is preferably made of a flexible resilient material, for example rubber. The collar 23 and meat stripper disc 21 may further comprise co-operating projections 25 and recesses 26 to allow an improved positioning of the meat stripper disc 21, and to prevent that the meat stripper disc 23 is displaced within the collar 23 in the course of the deboning operation. This can however also be achieved with other means known to the man skilled in the art, for example by providing holes in the outer edge of the meat stripper disc and pins in the frame, provided to extend through these holes. To improve the positioning of the meat stripper disc 21 and allow a removable mounting of the meat stripper disc 21 within the collar 23, clamping means 24 may be provided on a side facing the bone pusher assembly 10.

As can be seen from figure 5, the thickness of the meat stripper disc 21 may vary. The outer edge of the meat stripper disc, which is received in the supporting frame 23 preferably, has a smaller thickness than the remaining part of the meat stripper disc. This varying thickness involves an improved flexibility of the meat stripper disc, so that the outer edge of the disc is bent towards the bone in the course of the deboning operation, the inner part of the disc remaining substantially non-deformed, to achieve an improved scraping of the edge of the meat stripper disc over the bone.

As can be seen from figure 3 and 5, a meat stripper device 2 and corresponding bone pusher assembly 10 are mounted in line. In line with the aperture 22 of the meat stripper disc 21, on a side of the meat stripper disc 21 facing away from the bone pusher assembly 10, means 20 are provided for receiving and retaining the bone after it has been removed from the meat. In that way not only a proper deboning of the animal parts can be ensured, but also it is possible to avoid that the bone after it has been pushed through the meat stripper disc in any manner adversely affects the functioning of the device. The bone receiver may for example be a more or less cylindrical tube 20 mounted on work table 15.

On the work table 15, a plurality of bone pusher assemblies 10 is mounted. In the preferred embodiment of figure 3 and 5, each bone pusher assembly 10 comprises a centering tube 12 wherein a pusher rod 11 is mounted. The centering tube 12 is slideably mounted in a piston rod 17, which can be operated as generally known to the man skilled in the art. The piston rod 17 can for example be a pneumatic or hydraulic operated cylinder.

The pusher rod 11 is extendible from the bone pusher assembly 10 between a retracted position shown in A (fig. 4) for receiving the animal part to be deboned and a fully extended position, shown in D. In the completely extended position D, the pusher rod 11 extends through the aperture 22 of the meat stripper disc 21 to allow a complete deboning of the animal part 7.

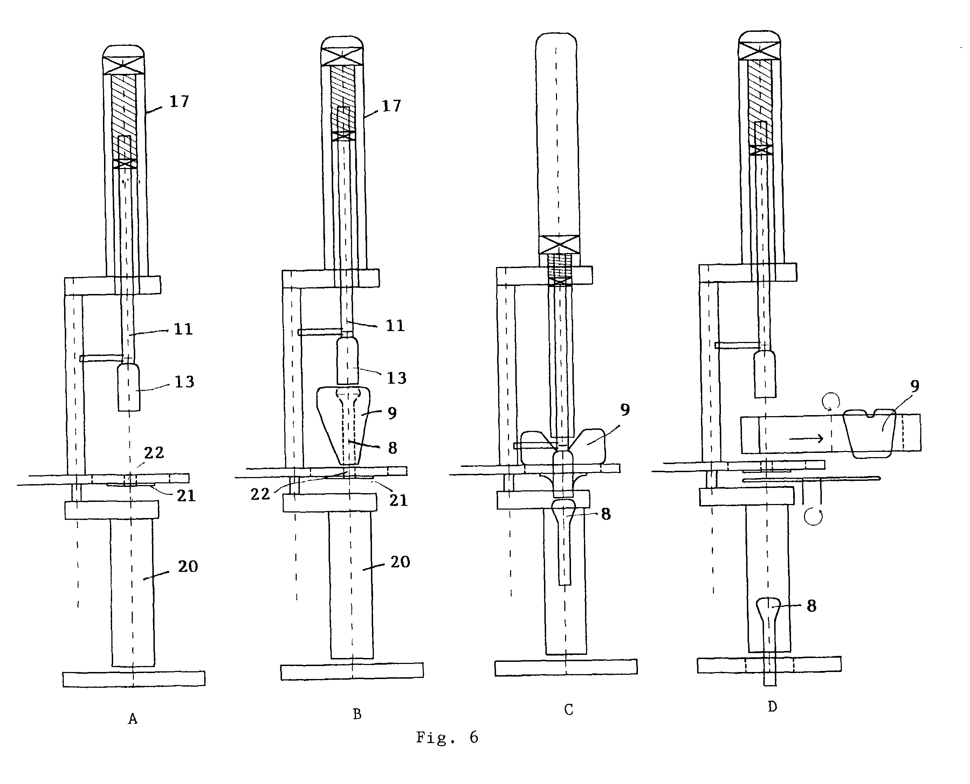

In the retracted position (fig. 6B), a clamping force is exerted by the bone pusher assembly 10 to the animal part. This can be achieved in various ways generally known to the man skilled in the art. According to a first possible example, the meat is supported by the meat stripper disc 21, the meat is clamped between the pusher rod 11 and the meat stripper disc 21 by the weight of the bone pusher assembly 10. The clamping force can be increased by providing a spring or by exerting a pneumatic or hydraulic pressure to the pusher rod 11.

An anchoring 19 is preferably provided to anchor the pusher rod 11 within the centering tube 12, to prevent rotation or movement of the pusher rod 11 within the centering tube 12 in the course of the deboning operation, and to prevent breaking of the bone 8 or improper deboning. In case rather large parts have to be deboned, namely significant forces have to be applied by the pusher rod 11 to allow the bone 8 to be loosened and separated from the meat 9. Thereby it may happen that there is a tendency that the pusher rod 11 is rotated.

The bone pusher assembly 10 of the device of this invention further comprises a guiding 18, for guiding the displacement of the centering tube 12 and pusher rod 11 between the retracted and extended position.

The surface of the head part 13 of the pusher rod 11 facing the animal part 7 preferably has a shape which is adapted to the shape of the end of the bone 8 to be received by it to allow larger forces to be applied to the bone and provide an improved deboning. Thereto, the surface of the head part 13 and the end of the bone may have a complementary shape, so that they engage each other. In another possible embodiment a pin 14 may be mounted on the head part 13, which is provided to engage the cartilage part of the knuckle. The circumferential edge of the pusher rod 11 preferably protrudes in downward direction to engage the knuckle and allow an improved grip on the bone. In that way also there is no necessity that the pin engages the bone exactly in the middle to allow a proper deboning. Preferably the edges are somewhat rounded so prevent that the bone is cleaved. In a further embodiment, the surface of the head part is provided with an elastic coating to prevent damaging of the bone in the course of the deboning operation.

A driving drives the displacement of the pusher rod 11 and centering tube 12 between the retracted and the extended position, i.e. in the course of the deboning action and when moving the pusher rod back to its starting position after a deboning operation has been completed. In the embodiment shown in figure 3, the driving of is pneumatic. It is preferred in the present invention that each bone pusher assembly 10 comprises its own driving, so as to allow increased forces to be applied and larger animal parts to be deboned. A preferred pneumatic driving system comprises a cam carrying plate at 37. The cams are provided to operate control valves, which either provide pressure for displacing the bone pusher assembly towards or from the meat stripper disc. Thereto, the pneumatic driving system comprises a plurality of double acting pneumatic pressing cylinders 17.

The operation of the device of this invention can be described as follows.

An animal part 7, preferably a fowl part, to be deboned is loaded at the loading position 3 into the deboning unit 1 (fig. 1). Thereto, the bone pusher assembly 10 is lifted manually. The lifting of the bone pusher assembly 10 can however also be done in an automated manner. The animal part 7 is loaded by inserting the side of the part carrying the large knuckle in the head part 13 of the pusher rod 11 (fig. 6B). The part carrying the smaller knuckle rests on the meat stripper disc 21. In case the bone pusher assembly 10 has been lifted too high, it will sink by itself, because of its own weight. As the housing 5 revolves around its revolving axis 30 from the loading towards the deboning position, valve 27 is opened by the cam plate 37, and pressurized air is introduced into the cylinder 17. As the cylinder 17 is filled, bone pusher assembly 10 is lowered in the direction of the work table 15 (fig. 6C, fig. 4B and C). The top of the pusher rod 11 penetrates the animal part 7 and is moved in downward direction within the animal part, thereby advancing the bone 8 towards the meat stripper disc 21. As the bone approaches the meat stripper disc 21, first the small knuckle is forced to pass through the aperture 22. As pressure in cylinder 17 increases, the pusher rod 11 is guided further in downward direction throughout the interior of the meat, thus forcing the bone 8 to pass through the aperture 22. Thereby the inner part of the meat stripper disc 21 is bent with respect to its outer edge, and the rim of the aperture 22 of the meat stripper disc 21 scrapes over the bone, to improve the meat removal. After part of the bone has been displaced through the aperture 22, the bone 8 is received in the bone receiver. The pusher rod 11 is extended from the bone pusher assembly, with respect to the meat stripper disc 21 over a distance which is at least the length of the tendons of the animal part, in such a way that the pusher rod protrudes from the aperture 22. Such an extension of the pusher rod 11 mostly involves a complete deboning of the animal part. After the deboning operation has been completed, valve 38 is opened, pressurized gas is introduced at 39 and bone pusher assembly 10 is raised (fig. 4E, 6D). Any remaining meat and/or tendons and/or ligaments are cut from the bone 8 after the bone pusher assembly 10 has been lifted above the meat stripper disc 21.

## Claims

1. A deboning device for separating bone (8) and meat (9) of a animal part (7), the device comprising a support system (5) for supporting at least one deboning unit (1) and moving said at least one deboning unit (1) from a loading position (3) for loading the animal part (7) to a deboning position (4) for deboning the animal part (7), the deboning unit (1) being provided to receive the animal part (7) in longitudinal direction thereof, the deboning unit (1) comprising a meat stripper device (2) with a meat stripper disc (21)made of a flexible material, the meat stripper disc comprising an aperture (22) for receiving the bone (8) in longitudinal direction there through, the deboning unit (1) further comprising a bone pusher assembly (10) aligned with the meat stripper disc (21), the bone pusher assembly being slideably mounted in longitudinal direction of the animal part (7) so as to co-operate with the meat stripper disc (21) to displace the bone (8) in longitudinal direction with respect to the meat, at least part of the bone pusher assembly (10) being displaceable throughout the aperture in the meat stripper disc (21), **characterized in that** the deboning device further comprises
• clamping means (2, 10) for clamping at least part of the animal part (7) within the deboning unit (1) in longitudinal direction of the bone (8), at a position between the bone pusher assembly (10) and the meat stripper device (2),
• means for supporting the meat (9) in cross direction of the bone,
• free space being open around the animal part to allow the meat to be compressed in the course of the deboning operation,
• means for retaining the bone after it has been displaced through the aperture of the meat stripper disc
the aperture in the meat stripper device (21) being smaller than the smallest diameter of the bone.

2. A device as claimed in claim 1, **characterized in that** the animal part comprises tendons and at least part of the bone pusher assembly (10) is displaceable through the aperture in the meat stripper device (21) over a distance that is at least the length of the tendons.

3. A device as claimed in claim 1 or 2, **characterized in that** the device comprises means for adjusting the position of the clamping means (2, 10) to the length of the animal part (7).

4. A deboning device as claimed in any one of claims 1-3, **characterized in that** the bone pusher assembly (10) comprises a pusher rod (11) that is slideably moveable within the deboning unit (1) for displacing the bone (8) through the meat stripper device in longitudinal direction of the bone (8), which pusher rod (11) is displaceable between a first retracted position to allow the animal part to be inserted in the deboning unit (1) and a second extended position corresponding to a deboned animal part (7).

5. A deboning device as claimed in claim 4, **characterized in that** the pusher rod (11) comprises at a side facing the meat stripper device (2), a head part (13) for engaging a first end of the bone (8) of the animal part (7).

6. A deboning device as claimed in claim 5, **characterized in that** the head part (13) has a surface that is coated with a coating of an elastic material.

7. A deboning unit as claimed in any one of claims 1-6, **characterized in that** the meat stripper device (2) comprises at a side pointing away form the bone pusher assembly (10) a frame (23) for receiving the meat stripper disc (21) and supporting the meat stripper disc (21) along at least part of its circumference, and **in that** the meat stripper device (2) comprises clamping means (24) for removably clamping the meat stripper disc (21) within the frame (23).

8. A deboning device as claimed in claim 7, **characterized in that** the meat stripper disc (21) and the frame (23) comprise co-operating, complementary projections (25) and recesses (26).

9. A deboning device as claimed in claim 7 or 8, **characterised in that** the meat stripper disc (21) has a thickness which decreases towards the aperture.

10. A deboning device as claimed in any one of claims 1-9, **characterized in that** the pusher rod (11) is mounted within a piston rod (12).

11. A deboning device as claimed in any one of claims 1-10, **characterized in that** the piston rod (12) and pusher rod (11) are driven by a double acting pneumatic cylinder (17) for moving the bone pusher assembly from the retracted position towards the deboning position and back.

12. A device as claimed in any one of claims 1 to 11, **characterized in that** cutting means (20) are provided at a position upstream the deboning position (4) of the processing path for cutting any meat and/or tendons and/or ligaments remaining between the bone (8) and the meat (9) from the bone.

13. A device as claimed in anyone of claims 1 to 12, **characterized in that** at a position upstream the deboning position (4) of the processing path means (30) are provided, preferably a paddle wheel, for picking up the meat from the carrier (1) and transporting the meat towards a meat collector (8).

14. A device as claimed in any one of claims 1-13, **characterized in that** the deboning units (1) are mounted on a revolving support system (5) and extend parallel to the revolving axis of the support system (5).

## Patentansprüche

1. Vorrichtung zum Trennen von Knochen (8) und Fleisch (9) von einem Tierglied (7), wobei die Vorrichtung aus einem Unterstützungssystem (5) besteht zum Halten von wenigstens einer Entbeinungseinheit (1) und zum Bewegen dieser benannten wenigstens einen Entbeinungseinheit (1) von einer Ladeposition (3), die das Tierglied (7) aufnimmt, in eine Entbeinungsposition (4) um das Tierglied (7) zu entbeinen, dabei ist die Entbeinungseinheit (1) ausgestattet zur Aufnahme des Tierglieds (7) in Längsrichtung hiervon, die Entbeinungseinheit (1) schließt eine Fleischentfernungsvorrichtung (2) mit Fleischentfernungsscheibe (21) aus flexiblem Material ein, wobei die Fleischentfernungsscheibe (21) mit einer Öffnung (22) ausgestattet ist um den Knochen (8) in Längsrichtung hindurchzuführen, die Entbeinungseinheit (1) enthält weiter einen Knochenschieberbauteil (10) fluchtend mit der Fleischentfernungsscheibe (21), der Knochenschieberbauteil wird verschiebbar in Längsrichtung zum Tierglied (7) installiert um in Zusammenarbeit mit der Fleischentfernungsscheibe (21) den Knochen (8) in einer dem Fleisch gegenüber länglichen Richtung zu verschieben, wobei wenigstens ein Teil des Knochenschieberbauteils (10) durch die Öffnung in der Fleischentfernungsscheibe (21) verschiebbar ist, **dadurch gekennzeichnet, dass** die Entbeinungsvorrichtung weiter Folgendes einschließt:
• Festklemmvorrichtung (2, 10) zum Festklemmen wenigstens eines Teils des Tierglieds (7) in der Entbeinungsvorrichtung (1) in einer Längsrichtung zum Knochen (8), in einer Position zwischen dem Knochenschieberbauteil (10) und der Fleischentfernungsvorrichtung (2),
• Vorrichtung zum Halten des Fleisches (9) in Querrichtung zum Knochen,
• freier Platz rund um das Tierglied damit das Fleisch während dem Entbeinungsvorgang zusammengedrückt werden kann,
• Vorrichtung um den Knochen zu halten nachdem er durch die Öffnung der Fleischentfernungsscheibe verschoben wurde,
und die Öffnung der Fleischentfemungsvorrichtung (21) kleiner ist als der kleinste Durchmesser des Knochens.

2. Vorrichtung nach Anspruch 1, **dadurch gekennzeichnet, dass** das Tierglied Sehnen enthält und wenigstens ein Teil der Knochenschiebervorrichtung (10) durch die Öffnung in der Fleischentfernungsscheibe (21) über eine Distanz, die mindestens so lang wie die Sehnen ist, verschiebbar ist.

3. Vorrichtung nach Anspruch 1 oder 2, **dadurch gekennzeichnet, dass** die Vorrichtung über ein Behelfsmittel zum Einstellen der Festklemmvorrichtung (2, 10) gemäß der Länge des Tiergliedes (7) verfügt.

4. Entbeinungsvorrichtung nach einem der Ansprüche 1 bis 3, **dadurch gekennzeichnet, dass** die Knochenschiebervorrichtung (10) einen Stoßarm (11) einschließt, der durch Gleiten innerhalb der Entbeinungseinheit (1) bewegbar ist um den Knochen (8) durch die Fleischentfemungsvorrichtung in Längsrichtung zum Knochen (8) zu verschieben, welcher Stoßarm (11) verschiebbar ist zwischen einer ersten eingezogenen Stellung um das Tierglied in die Entbeinungseinheit (1) einzuführen und einer zweiten, ausgefahrenen Stellung die dem entbeinten Tierglied entspricht (7).

5. Entbeinungsvorrichtung nach Anspruch 4, **dadurch gekennzeichnet, dass** der Stoßarm (11) an einer Seite die der Fleischentfemungsvorrichtung (2) gegenüberliegt, einen Kopfteil (13) zum Einrasten eines ersten Endes des Knochens (8) des Tiergliedes (7) enthält.

6. Entbeinungsvorrichtung nach Anspruch 5, **dadurch gekennzeichnet, dass** der Kopfteil (13) eine Fläche mit einem Überzug aus elastischem Material aufweist.

7. Entbeinungsvorrichtung nach einem der Ansprüche 1 bis 6, **dadurch gekennzeichnet, dass** die Fleischentfemungsvorrichtung (2) an einer Seite die von der Knochenschiebervorrichtung (10) weg zeigt, einen Rahmen (23) aufweist um die Fleischentfernungsscheibe (21) aufzunehmen und die Fleischentfernungsscheibe (21) zu unterstützen, wenigstens entlang eines Teils ihres Umfangs, und dadurch, dass die Fleischentfernungsvorrichtung (2) eine Festklemmvorrichtung (24) enthält, damit die Fleischentfernungsscheibe (21) abnehmbar am Rahmen (23) angeklemmt werden kann.

8. Entbeinungsvorrichtung nach Anspruch 7, **dadurch gekennzeichnet, dass** die Fleischentfernungsscheibe (21) und der Rahmen (23) zusammenwirkende, sich ergänzende Überstände (25) und Vertiefungen (26) aufweisen.

9. Entbeinungsvorrichtung nach Anspruch 7 oder 8, **dadurch gekennzeichnet, dass** die Fleischentfernungsscheibe (21) eine Dicke aufweist, die gegen die Öffnung hin dünner wird.

10. Entbeinungsvorrichtung nach einem der Ansprüche 1 bis 9, **dadurch gekennzeichnet, dass** der Stoßarm (11) in einer Kolbenstange (12) montiert ist.

11. Entbeinungsvorrichtung nach einem der Ansprüche 1 bis 10, **dadurch gekennzeichnet, dass** Kolbenstange (12) und Stoßarm (11)
durch doppelt wirkende pneumatische Zylinder (17) angetrieben werden um die Knochenschiebervorrichtung aus der zurückgezogenen in die Entbeinungsstellung und zurück zu bewegen.

12. Vorrichtung nach einem der Ansprüche 1 bis 11, **dadurch gekennzeichnet, dass** eine Schneidevorrichtung (20) vorhanden ist an einer Stellung oberhalb der Entbeinungsposition (4) des Verarbeitungswegs, zum Wegschneiden von Fleisch und/oder Sehnen und/oder Wurzelhäuten vom Knochen die zwischen Knochen (8) und Fleisch (9) übrig geblieben sind.

13. Vorrichtung nach einem der Ansprüche 1 bis 12, **dadurch gekennzeichnet, dass** an einer Stelle oberhalb der Entbeinungsposition (4) des Verarbeitungswegs Vorrichtungen (30) zur Verfügung stehen, vorzugsweise ein Schaufelrad, um das Fleisch vom Träger (1) aufzugreifen und das Fleisch in Richtung Fleischkollektor (8) zu transportieren.

14. Vorrichtung nach einem der Ansprüche 1 bis 13, **dadurch gekennzeichnet, dass** die Entbeinungseinheiten (1) an einem sich drehenden Unterstützungssystem (5) angebracht sind und parallel zu der sich drehenden Achse des Unterstützungssystems (5) ausfahrbar sind.

## Revendications

1. Dispositif de désossage pour séparer les os (8) et la viande (9) d'une partie d'animal (7), le dispositif comprenant un système de support (5) pour supporter au moins une unité de désossage (1) et pour déplacer ladite au moins une unité de désossage (1 ) d'une position de chargement (3) destinée à charger la partie d'animal (7) vers une position de désossage (4) destinée à désosser la partie d'animal (7) dans son sens longitudinal, l'unité de désossage (1) étant prévue pour recevoir la partie d'animal (7) dans son sens longitudinal, l'unité de désossage (1) comprenant un dispositif pour enlever la viande (2) avec un disque pour enlever la viande (21), le disque pour enlever la viande comprenant une ouverture (22) pour recevoir l'os (8) dans le sens longitudinal, l'unité de désossage (1) comprenant en outre un ensemble pour pousser les os (10) aligné sur le disque pour enlever la viande (21), l'ensemble pour pousser les os étant monté de manière coulissante dans le sens longitudinal de la partie d'animal (7) de manière à coopérer avec le disque pour enlever la viande (21) afin de déplacer l'os (8) dans le sens longitudinal par rapport à la viande, au moins une partie de l'ensemble pour pousser les os (10) pouvant être déplacée à travers l'ouverture dans le disque pour enlever la viande (21), **caractérisé en ce que** le dispositif de désossage comprend en outre
- des moyens de serrage (2, 10) pour serrer au moins une partie de la partie d'animal (7) dans l'unité de désossage (1) dans le sens longitudinal de l'os (8) dans une position entre l'ensemble pour pousser les os (10) et le dispositif pour enlever la viande (2),
- des moyens pour supporter la viande (9) dans le sens transversal de l'os,
- un espace libre étant ouvert autour de la partie d'animal pour permettre à la viande d'être comprimée au cours de l'opération de désossage,
- des moyens pour retenir l'os après qu'il a été déplacé à travers l'ouverture du disque pour enlever la viande,
l'ouverture dans le disque pour enlever la viande (21) étant plus petite que le plus petit diamètre de l'os.

2. Dispositif comme revendiqué dans la revendication 1, **caractérisé en ce que** la partie d'animal comprend des tendons, et au moins une partie de l'ensemble pour pousser les os (10) peut être déplacée à travers l'ouverture dans le disque pour enlever la viande (21) sur une distance qui est au moins de la longueur des tendons.

3. Dispositif comme revendiqué dans la revendication 1 ou 2, **caractérisé en ce que** le dispositif comprend des moyens pour ajuster la position des moyens de serrage (2, 10) à la longueur de la partie d'animal (7).

4. Dispositif de désossage comme revendiqué dans une quelconque des revendications 1 - 3, **caractérisé en ce que** l'ensemble pour pousser les os (10) comprend une tige poussoir (11) qui peut être déplacée de manière coulissante dans l'unité de désossage (1) pour déplacer l'os (8) à travers le dispositif pour enlever la viande dans le sens longitudinal de l'os (8), laquelle tige poussoir (11) peut être déplacée entre une première position rétractée pour permettre à la partie d'animal d'être insérée dans l'unité de désossage (1) et une deuxième position étendue correspondant à la partie d'animal (7) désossée.

5. Dispositif de désossage comme revendiqué dans la revendication 4, **caractérisé en ce que** la tige poussoir (11) comprend sur un côté faisant face au dispositif pour enlever la viande (2), une partie tête (13) pour entrer en prise avec une première extrémité de l'os (8) de la partie d'animal (7).

6. Dispositif de désossage comme revendiqué dans la revendication 5, **caractérisé en ce que** la partie tête (13) a une surface qui est revêtue d'un revêtement en matière plastique.

7. Unité de désossage comme revendiqué dans une quelconque des revendications 1 - 6, **caractérisée en ce que** le dispositif pour enlever la viande (2) comprend sur un côté à l'opposé de l'ensemble pour pousser les os (10) un cadre (23) pour recevoir le disque pour enlever la viande (21) et pour supporter le disque pour enlever la viande (21) le long d'au moins une partie de sa circonférence, et **en ce que** le dispositif pour enlever la viande (2) comprend des moyens de serrage (24) pour serrer de manière amovible le disque pour enlever la viande (21) dans le cadre (23).

8. Dispositif de désossage comme revendiqué dans la revendication 7, **caractérisé en ce que** le disque pour enlever la viande (21) et le cadre (23) comprennent des protubérances (25) et des évidements (26) complémentaires qui coopèrent.

9. Dispositif de désossage comme revendiqué dans la revendication 7 ou 8, **caractérisé en ce que** le disque pour enlever la viande (21) a une épaisseur qui diminue en direction de l'ouverture.

10. Dispositif de désossage comme revendiqué dans une quelconque des revendications 1 - 9, **caractérisé en ce que** la tige poussoir (11 ) est montée dans une tige de piston (12).

11. Dispositif de désossage comme revendiqué dans une quelconque des revendications 1 - 10, **caractérisé en ce que** la tige de piston (12) et la tige poussoir (11) sont commandées par un vérin pneumatique à double effet (17) pour déplacer l'ensemble pour pousser les os de la position rétractée vers la position de désossage et retour.

12. Dispositif comme revendiqué dans une quelconque des revendications 1 - 11, **caractérisé en ce que** des moyens de coupe (20) sont prévus, dans une position en amont de la position de désossage (4) sur le trajet de traitement, pour séparer la viande et / ou les tendons et/ou les ligaments restant entre l'os (8) et la viande (9) de l'os.

13. Dispositif comme revendiqué dans une quelconque des revendications 1 - 12, **caractérisé en ce que** dans une position en amont de la position de désossage (4) sur le trajet de traitement, des moyens sont prévus, de préférence une roue à aubes, pour recueillir la viande sur le transporteur et transporter la viande vers un collecteur de viande. (8).

14. Dispositif comme revendiqué dans une quelconque des revendications 1 - 13, **caractérisé en ce que** les unités de désossage (1) sont montées sur un système de support tournant (5) et s'étendent parallèlement à l'axe de rotation du système de support (5).
